Europäisches Patentamt

(19) European Patent Office

Office européen des brevets

(11) Veröffentlichungsnummer: **0 046 955**
**B1**

(12) **EUROPÄISCHE PATENTSCHRIFT**

(45) Veröffentlichungstag der Patentschrift:
**10.04.85**

(21) Anmeldenummer: **81106538.2**

(22) Anmeldetag: **22.08.81**

(51) Int. Cl.⁴: **H 01 B 13/00,** B 29 C 35/00,
**H 05 B 6/80**

(54) Vorrichtung für die trockene Vernetzung von Strängen aus Elastomeren.

(30) Priorität: **02.09.80 DE 3033012**

(43) Veröffentlichungstag der Anmeldung:
**10.03.82 Patentblatt 82/10**

(45) Bekanntmachung des Hinweises auf die Patenterteilung:
**10.04.85 Patentblatt 85/15**

(84) Benannte Vertragsstaaten:
**DE FR GB IT SE**

(56) Entgegenhaltungen:
**CH - A - 523 646**
**DD - A - 97 117**
**DE - A - 1 915 342**
**DE - A - 2 154 344**
**DE - A - 2 846 610**

(73) Patentinhaber: **Paul Troester Maschinenfabrik, Am
Brabrinke 2-4, D-3000 Hannover 89 (DE)**

(72) Erfinder: **Focht, Harry, Dicken Riede 2,
D-3005 Hemmingen 2 (DE)**

(74) Vertreter: **Junius, Walther, Dr., Wolfstrasse 24,
D-3000 Hannover 81 (DE)**

## Beschreibung

Die Erfindung betrifft eine Vorrichtung für die trockene Vernetzung von Strängen aus Elastomeren, insbesondere in der Kabelherstellung sowie der Herstellung von Mehrschichtprofilen, bestehend aus einem vom Strang durchlaufenen, aus mehreren Rohrstücken zusammengesetzten Rohr, das mit einem unter Überdruck stehenden inerten Gas gefüllt ist und das mit Zuleitungen für elektromagnetische UHF-Energie versehen ist.

Eine derartige Vorrichtung ist aus der DE-A1-2 851 103 bekannt geworden.

Bei den erheblichen Mengen an elektromagnetischer UHF-Energie, die für die Vernetzung benötigt werden, bereitet die Zuführung dieser UHF-Energie in das Rohr Probleme. Denn diese erheblichen Mengen an UHF-Energie im Millimeter-, Zentimeter- oder Dezimeter-Wellenbereich muss möglichst verlustlos in das Rohr eingeführt werden, in welchem ein Überdruck herrscht, der notwendig ist, um chemische Reaktionen an der Oberfläche des Stranges während der Vernetzung zu vermeiden, der aber nicht bis in die elektromagnetischen Generatoren für die UHF-Energie gelangen darf. Die verlustlose Zuleitung der UHF-Energie in das Rohr ist nicht nur aus Gründen der Energieersparnis notwendig, sondern vor allem auch deshalb, weil an denjenigen Stellen, an denen die Verluste auftreten, erhebliche Erhitzungen entstehen, die bis zu einer Zerstörung von Teilen der Vorrichtung führen können.

Die Zuführung von erheblichen Mengen an elektromagnetischer UHF-Energie bereitet schon dort erhebliche Probleme, wo nicht mit inerten Gasen und nicht mit Überdruck gearbeitet wird. Man speist die Energie in einer Vielzahl von Einspeisungsstellen in einen Resonatorraum ein und verwendet für die Zuführung eine aussenliegende Hohlleiterverzweigung (DE-A1-2 846 610), man ordnet zwischen je zwei Resonatorkammern eine Erholstrecke an (DE-A1-2 154 344, Fig. 3) und man verwendet überall Abstimmelemente (DE-A1-1 915 342, DD-A-97 117), um möglichst viel Energie aus der Zuleitung in das Behandlungsrohr einzuführen. Diese bereits bei ohne Überdruck arbeitenden auftretenden Probleme verstärken sich naturgemäss dort, wo mit Überdruck gearbeitet wird, weil die herkömmlichen Generatoren für UHF-Energie so konstruiert sind, dass sie selbst nicht unter Überdruck stehen können.

Es ist die Aufgabe der Erfindung, UHF-Energie in das mit unter Überdruck stehende inertem Gas gefüllte Rohr möglichst verlustlos einzuleiten.

Die Erfindung besteht darin, dass jede Zuleitung aus einem zwischen zwei Rohrstücke eingesetzten Körper besteht, der einen Hohlraum von grösseren Querschnittsdimensionen als das Rohr aufweist, in den ein vom UHF-Generator kommender, mit einem UHF-Transformator oder mindestens einem E- bzw. H-Winkel bzw. -Bogen versehener Hohlleiter oder ein mit einem UHF-Transformator versehener Koaxialleiter führt, wobei dieser Körper bzw. der zu ihm führende Hohlleiter verstellbare Abstimmelemente aufweist, und dass innerhalb des Transformators oder des E- bzw. H-Winkels bzw. -Bogens eine für UHF-Energie durchlässige Überdruckabdichtung angeordnet ist.

Mit dieser Vorrichtung lässt sich UHF-Energie nahezu verlustlos in das Rohr einleiten, in welchem das Kabel in einem unter Überdruck stehenden inerten Gas geführt ist. Denn die Anordnung der Überdruckabdichtung an derjenigen Stelle, an der in dem Koaxial- oder Hohlleiter ein Transformator angeordnet ist, gibt eine Gewähr dafür, dass eine einwandfreie Abdichtung gegen Überdruck an dieser Stelle erzielt ist, an der nur kleine elektrische Verluste – wenn überhaupt – auftreten. Auf diese Weise kann die Zuführung der elektromagnetischen UHF-Energie durch einen Koaxialleiter oder Hohlleiter verlaufen, was eine nahezu verlustlose Einleitung der UHF-Energie in das Rohr gewährleistet. Bei dieser Vorrichtung ist es baulich vorteilhaft, wenn jede Zuleitung für UHF-Energie aus einem zwischen zwei Rohrstücke eingesetzten Körper besteht, der einen Hohlraum von grösseren Querschnittsdimensionen als das Rohr aufweist und der verstellbare Abstimmelemente aufweist. Diese grösseren Querschnittsdimensionen ergeben sich aber nur für einen Teil des Innenraumes des Körpers, nämlich dort, wo der Transformator und eventuell die Abstimmelemente angeordnet sind. Da der Hohlraum in dem zwischen die Rohrstücke eingesetzten Körper grössere Querschnittsdimensionen als das Rohr aufweist, besteht die Möglichkeit, hier zur Anpassung Abstimmelemente unterzubringen, die eine Reflektion von UHF-Energie in dem der Energiezuführung aus dem Generator dienenden Leiter vermeiden und die die Einkopplung der UHF-Energie in die beiden benachbarten Rohrstücke begünstigen. Dieser Hohlraum von grösseren Querschnittsdimensionen als das Rohr kann darüber hinaus auch teilweise als Resonatorkammer dienen.

Vorteilhaft ist es, wenn die Abstimmelemente in an den Hohlraum im Körper angekoppelten Hohlleiterstücken untergebracht sind. Zweckmässigerweise liegen diese Hohlleiter sämtlich in einer Ebene. Bei den Abstimmelementen kann es sich um Antennen, Stifte oder Kurzschlussschieber handeln. Handelt es sich um Abstimmstifte, kann es zweckmässig sein, diese in den Hohlraum im Körper hineinragen zu lassen. Vorteilhafterweise werden die Abstimmelemente zur Feldverschiebung innerhalb des Körpers und innerhalb des Rohres ausgelegt. Es können aber auch Abstimmelemente in dem die Energie zuführenden Leiter untergebracht sein, die zur Feldverschiebung gegenüber dem Generator dienen.

Sehr vorteilhaft für die Wirkungsweise der erfindungsgemässen Vorrichtung ist es, wenn der die Energie zuführende Koaxial- oder Hohlleiter und die die Abstimmelemente aufnehmenden Hohlleiter um jeweils 120° versetzt im Zuleitungskörper angeordnet sind.

Zweckmässig ist es, wenn beidseitig des Körpers Flansche für den Anschluss von Teilstücken des Rohres angeordnet sind. Diese dienen der einfachen Befestigung des eingesetzten Körpers.

Um den im Rohr der Vernetzung ausgesetzten Strang an allen Stellen möglichst gleichmässig zu vernetzen, ist es vorteilhaft, wenn jeder in den Hohlraum des Körpers mündende Hohlleiter in bezug auf seine radiale Lage zur Rohrachse versetzt gegenüber dem benachbarten Hohlleiter des benachbarten Körpers angeordnet ist.

Als besonders vorteilhaft hat es sich erwiesen, wenn der UHF-Transformator in dem Körper der Zuleitung ausgebildet ist. Denn hier lassen sich die an dieser Stelle auftretenden hohen mechanischen Kräfte, die vom Überdruck ausgeübt werden, am besten abfangen.

Vorteilhaft ist es, wenn der UHF-Transformator aus einem kontinuierlichen Querschnittsübergang oder mindestens einem Querschnittssprung des Hohlleiters gebildet ist. Zwischen diesen Querschnittssprüngen des Hohlleiters lässt sich der als Überdruckabdichtung zweckmässigerweise dienende Block aus Keramik oder Kunststoff am besten unterbringen.

Hier besteht die Möglichkeit, einen rechteckigen Block zu verwenden, wobei die Flächen der Querschnittssprünge parallel zueinander und parallel zu den Seitenflächen des Blockes liegen, wobei der Block zwischen diese Flächen der Querschnittsvorsprünge eingelegt oder eingespannt ist. Der Block hat hierbei Querschnittsdimensionen, die grösser sind als der Querschnitt des UHF-Energiezuleitungshohlleiters. Zweckmässigerweise wird der Block mit einer Dichtung eingespannt.

Der Block kann aber auch von keilförmiger, kegelstumpfförmiger oder pyramidenförmiger Gestalt sein und sich in seinem Querschnitt in Richtung auf das Rohr erweitern. Er wird dann durch Überdruck in seinem Sitz innerhalb des Hohlleiters, der hier ebenfalls eine hohlkegelförmige oder hohlpyramidenstumpfförmige bzw. hohlkeilförmige Gestalt aufweist, hineingedrückt und so gegen die Dichtflächen gepresst. An diesen kann ein besonderes Dichtungsmaterial vorgesehen sein, das elastomerischer oder metallischer Natur sein kann. So können beispielsweise Kupfer- oder Bleibleche als Dichtung dienen, ebenso wie aus Kunststoff hergestellte Folien oder Profile.

Der Block selbst besteht zweckmässigerweise aus Keramik oder aus Kunststoff, vorzugsweise aus PTFE (Teflon).

Zweckmässig ist es, die Überdruckzuleitungen dicht neben dem Block aus Keramik oder Kunststoff anzuordnen, die als Überdruckdichtung dienen. Ein hier eintretender Gasstrom, der dann weiter in das vom Strang durchlaufene Rohr führt, nimmt während der Vernetzung dorthin gelangende Verunreinigungen mit sich fort, so dass derartige Verunreinigungen nicht Stellen von Verlusten von UHF-Energie werden, sich dabei erhitzen und zu Beschädigungen der Überdruck-Abdichtung führen.

Das Wesen der vorliegenden Erfindung ist nachstehend anhand eines in der Zeichnung schematisch dargestellten Ausführungsbeispieles näher erläutert. Es zeigt:

Fig. 1 eine Seitenansicht der Vorrichtung,

Fig. 2 eine Ansicht von oben auf die Vorrichtung,

Fig. 3 einen Querschnitt durch den Zuleitungskörper,

Fig. 4 einen Längsschnitt durch den Zuleitungskörper.

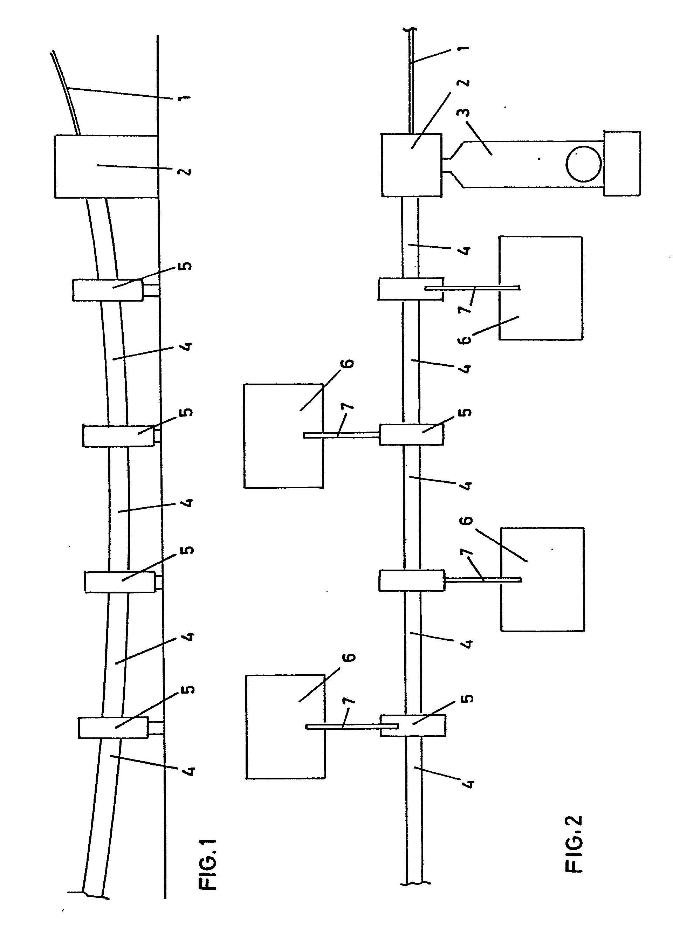

Eine Kabelseele 1 wird aus einer nicht dargestellten Abwickelvorrichtung oder Produktionsmaschine dem Spritzkopf 2 eines Extruders 3 zugeführt. An dem Spritzkopf 2 ist ein Rohr 4 angebracht, welches aus einzelnen Rohrstücken besteht, zwischen denen jeweils Körper 5 eingesetzt sind, die der Zuleitung von UHF-Energie aus Generatoren 6 über Hohlleiter 7 dienen. Im gezeichneten Ausführungsbeispiel sind vier Körper 5 vorgesehen. Diese sind gegeneinander derart versetzt angeordnet, dass die die UHF-Energie zuführenden Hohlleiter 7 versetzt gegenüber jeweils dem benachbarten Hohlleiter 7 angeordnet sind. Das ist aus Fig. 2 zu ersehen, wo die Generatoren 6 zu beiden Seiten des Rohres 4 angeordnet sind und der Hohlleiter 7 jeweils einmal im oberen linken Viertel des Körpers 5, dann im unteren rechten Viertel, dann im unteren linken Viertel und schliesslich im oberen rechten Viertel mündet.

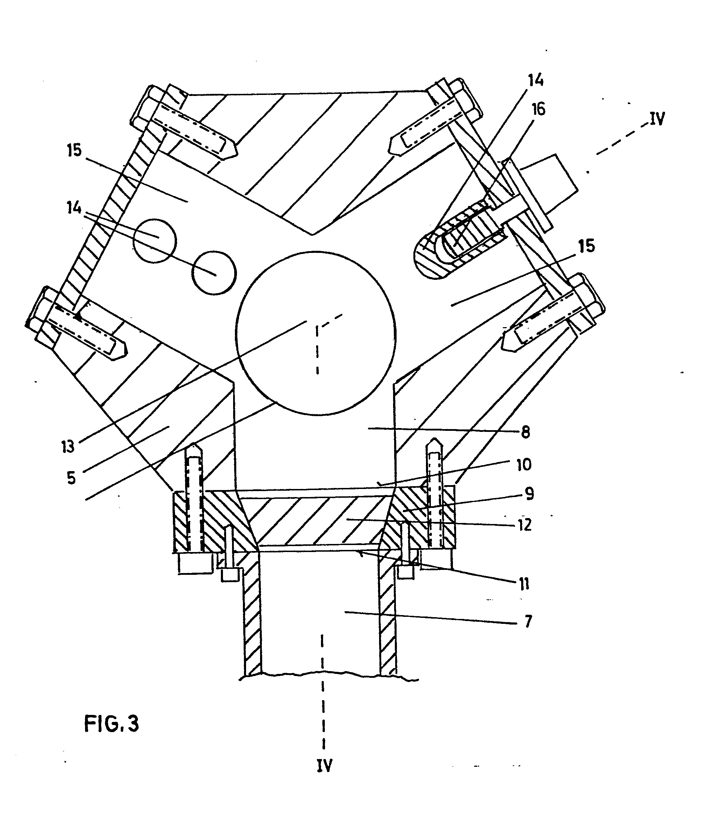

Jeder Körper 5 besteht aus einem Metallblock, in dem ein Kanal 8 ausgebildet ist, der der Zuführung von UHF-Energie dient und der sich über den Transformator 9 an den Hohlleiter 7 anschliesst, der der Zuleitung von UHF-Energie aus dem Generator 6 dient. Im gezeichneten Ausführungsbeispiel ist der Transformator 9 an den Körper 5 angeflanscht, er kann aber auch Teil des Körpers 5 unmittelbar sein. In diesem Transformator 9, der einen Querschnittssprung zwischen den Flächen 10 und 11 aufweist, ist die Überdruckabdichtung 12 eingebaut. Diese besteht im gezeichneten Ausführungsbeispiel aus einem pyramidenstumpfförmigen Block aus Keramikmaterial oder Kunststoffmaterial, das sich mit seinen Wandungen exakt an die Innenwandungen des Transformators 9 angepasst. Durch den Druck im Inneren des Rohres 4, der sich auch im Innenraum des Körpers 5 befindet, wird die Überdruckabdichtung 12 in ihren pyramidenstumpfförmigen Sitz gedrückt. Hierdurch ist eine hervorragende Abdichtung gewährleistet. Der Innenraum 13 des Körpers 5 weist einen etwas grösseren Innenquerschnitt als das Rohr 4 auf. Dieses kommt dadurch zustande, dass der Kanal 8 in diesen Hohlraum mündet und dass zusätzlich noch verstellbare Abstimmelemente in Form von verschiebbaren Abstimmstiften 14, die in Hohlleitern 15 untergebracht sind, vorgesehen sind. Die Hohlleiter 15 und der Kanal 8 schliessen miteinander drei Winkel von je 120° ein. Die verschiebbaren Abstimmstifte 14 werden mittels einer Spindel 16 bewegt, die von Hand oder automatisch einstellbar ist. Ist eine automatische Einstellung vorgesehen, so sind besondere Sonden im Hohlraum 13 oder in den anschliessenden Stücken des Rohres 4 vorgesehen, die einen Stellmotor für die Spindeln 16 betätigen. Die verschiebbaren Abstimmstifte 14 können koaxial zur Achse des Rohres 4 (linke Seite der Fig. 3) oder radial (rechte Seite der Fig. 3) angeordnet sein. Es können als Abstimmelemente auch Kurzschlussschieber verwendet werden, die mittels der Spindeln 16 in den Hohlleitern 15 verschiebbar sind.

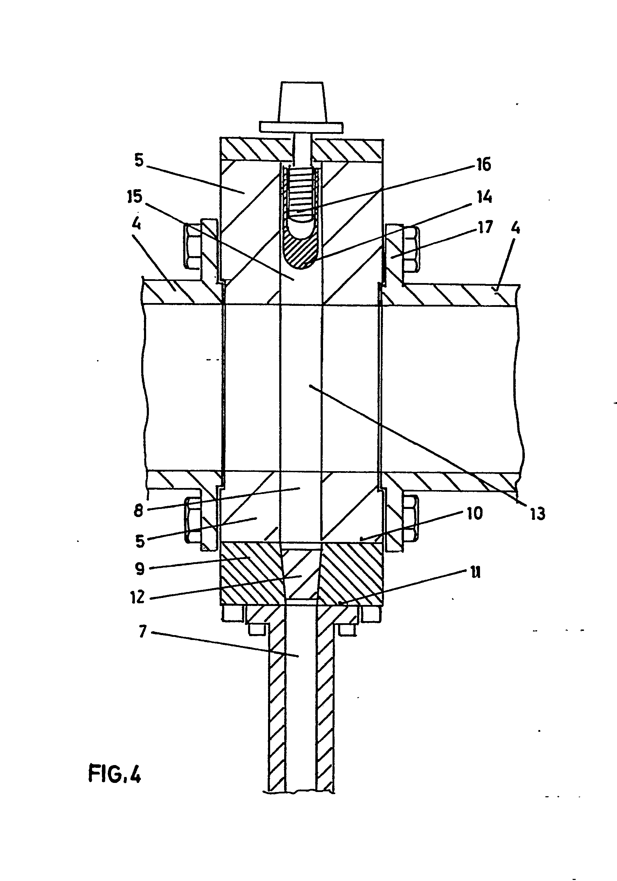

Wie aus Fig. 4 ersichtlich, sind die Rohrstücke des Rohres 4 mittels Flanschen 17 an dem Körper 5 der Zuleitung angebracht.

**Patentansprüche**

1. Vorrichtung für die trockene Vernetzung von Strängen aus Elastomeren, insbesondere in der Kabelherstellung sowie der Herstellung von Mehrschichtprofilen, bestehend aus einem vom Strang durchlaufenen, aus mehreren Rohrstücken zusammengesetzten Rohr (4), das mit einem unter Überdruck stehenden inerten Gas gefüllt ist und das mit Zuleitungen für elektromagnetische UHF-Energie versehen ist, dadurch gekennzeichnet, dass jede Zuleitung aus einem zwischen zwei Rohrstücke (4) eingesetzten Körper (5) besteht, der einen Hohlraum von grösseren Querschnittsdimensionen als das Rohr (4) aufweist, in den ein vom UHF-Generator (6) kommender, mit einem UHF-Transformator (9) oder mindestens einem E- bzw. H-Winkel bzw. -Bogen versehener Hohlleiter (7) oder ein mit einem UHF-Transformator versehener Koaxialleiter führt, wobei dieser Körper (5) bzw. der zu ihm führende Hohlleiter (7) verstellbare Abstimmelemente (14) aufweist, und dass innerhalb des UHF-Transformators (9) oder des E- bzw. H-Winkels bzw. -Bogens eine für UHF-Energie durchlässige Überdruckabdichtung (12) angeordnet ist.

2. Vorrichtung nach Anspruch 1, dadurch gekennzeichnet, dass die Abstimmelemente (14) in an den Hohlraum im Körper (5) angekoppelten Hohlleiterstücken untergebracht sind.

3. Vorrichtung nach Anspruch 1 oder 2, dadurch gekennzeichnet, dass die Hohlleiter sämtlich in einer Ebene liegen.

4. Vorrichtung nach Anspruch 1, dadurch gekennzeichnet, dass die als Abstimmstifte ausgebildeten Abstimmelemente (14) in den Hohlraum im Körper (5) hineinragen.

5. Vorrichtung nach Anspruch 1, dadurch gekennzeichnet, dass die Abstimmelemente (14) Kurzschlussschieber sind.

6. Vorrichtung nach Anspruch 1 oder 2, dadurch gekennzeichnet, dass der die Energie zuführende Koaxial- oder Hohlleiter (7) und die die Abstimmelemente (14) aufnehmenden Hohlleiter (15) um jeweils 120° versetzt im Körper (5) angeordnet sind.

7. Vorrichtung nach einem der Ansprüche 1 bis 6, dadurch gekennzeichnet, dass die Abstimmelemente (14) zur Feldverschiebung innerhalb des Körpers (5) und des Rohres (4) ausgelegt sind.

8. Vorrichtung nach Anspruch 1, dadurch gekennzeichnet, dass beidseits des Körpers (5) Flansche (17) für den Anschluss von Teilstücken des Rohres (4) angeordnet sind.

9. Vorrichtung nach Anspruch 1, dadurch gekennzeichnet, dass jeder in den Hohlraum (13) des Körpers (5) mündende Hohlleiter (7) in bezug auf seine radiale Lage zur Rohrachse versetzt gegenüber dem benachbarten Hohlleiter (7) des benachbarten Körpers (5) angeordnet ist.

10. Vorrichtung nach Anspruch 1, dadurch gekennzeichnet, dass der UHF-Transformator (9) in dem Körper (5) der Zuleitung ausgebildet ist.

11. Vorrichtung nach Anspruch 1, dadurch gekennzeichnet, dass der UHF-Transformator (9) aus mindestens einem Querschnittssprung des Hohlleiters (7) gebildet ist.

12. Vorrichtung nach Anspruch 1, dadurch gekennzeichnet, dass die Überdruckabdichtung (12) aus einem Block aus Keramik oder Kunststoff besteht.

13. Vorrichtung nach Anspruch 6, dadurch gekennzeichnet, dass der Block die Form eines Quaders aufweist, dessen Querschnittsdimensionen grösser als der Querschnitt des die UHF-Energie zuleitenden Hohlleiters (7) sind und gegen diesen mit einer Dichtung eingespannt ist.

14. Vorrichtung nach Anspruch 6, dadurch gekennzeichnet, dass der Block keilförmige, kegelstumpfförmige oder pyramidenstumpfförmige Gestalt aufweist und sich in seinem Querschnitt in Richtung auf das Rohr (4) erweitert.

15. Vorrichtung nach Anspruch 1, dadurch gekennzeichnet, dass dicht neben dem Block der Überdruckabdichtung (12) eine Zuleitung für Druckgas mündet.

**Claims**

1. A device for the dry cross-linking of elastomeric strands, in particular in cable production and the production of multi-layer profiles, consisting of a pipe (4), through which the strand passes and which is made of a plurality of pipe sections, is filled with an inert gas under excess pressure, and is provided with supply leads for electro-magnetic UHF-energy, characterised in that each supply lead consists of a body (5) which is inserted between two pipe sections (4) and which has a cavity of cross-sectional dimensions larger than the pipe (4) into which leads a waveguide (7) which issues from the UHF-generator (6) and is provided with a UHF-transformer (9), or at least one E- or H-angle or bend, or a coaxial line provided with a UHF-transformer, the body (5) or the waveguide (7) leading thereto having adjustable tuning elements (14); and that an excess pressure seal (12) permeable to UHF-energy is arranged within the UHF-transformer (9), or the E- or H-angle or bend.

2. A device as claimed in Claim 1, characterised in that the tuning elements (14) are accomodated in waveguide sections which are coupled to the cavity in the body (5).

3. A device as claimed in Claim 1 or Claim 2, characterised in that the waveguides are all arranged in one plane.

4. A device as claimed in Claim 1, characterised in that the tuning elements (14), which are constructed as tuning pins, protrude into the cavity in the body (5).

5. A device as claimed in Claim 1, characterised in that the tuning elements (14) are short-circuit slides.

6. A device as claimed in Claim 1 or Claim 2, characterised in that the coaxial conductor or waveguide (7), which supply energy, and the waveguides (15), which accomodate the tuning elements (14), are arranged in the body (5) so as to be respectively offset by 120°.

7. A device as claimed in one of Claims 1 to 6, characterised in that the tuning elements (14) for the field displacement are arranged within the body (5) and the pipe (4).

8. A device as claimed in Claim 1, characterised in that on both sides of the body (5) flanges (17) are arranged for the connection of part sections of the pipe (4).

9. A device as claimed in Claim 1, characterised in that each of the waveguides (7) opening into the cavity (13) of the body (5) is staggered relative to the adjacent waveguide (7) of the adjacent body (5) in respect of its radial position relative to the pipe axis.

10. A device as claimed in Claim 1, characterised in that the UHF-transformer (9) is arranged in the body (5) of the supply line.

11. A device as claimed in Claim 1, characterised in that the UHF-transformer (9) consists of at least one break in the cross-section of the waveguide (7).

12. A device as claimed in Claim 1, characterised in that the excess pressure seal (12) consists of a block made of ceramic, or synthetic resin.

13. A device as claimed in Claim 6, characterised in that the block has the form of a parallelepiped, the cross-sectional dimensions of which are greater than the cross-section of the waveguide (7) which feeds the UHF-energy, and is clamped against this waveguide with a seal.

14. A device as claimed in Claim 6, characterised in that the block has the form of a wedge, a truncated cone, or a truncated pyramid, and increases in cross-section in the direction of the pipe (4).

15. A device as claimed in Claim 1, characterised in that a supply line for pressure gas opens close beside the block of the excess pressure seal (12).

**Revendications**

1. Dispositif pour la réticulation à sec de cordons d'élastomères, notamment dans le domaine de la fabrication des câbles et de la fabrication de profilés multicouche, et constitué par un tube (4) traversé par le cordon et constitué par la réunion de plusieurs éléments tubulaires et qui est rempli par un gaz inerte placé en surpression et est équipé de lignes d'alimentation pour l'énergie électromagnétique hyperfréquences, caractérisé en ce que chaque ligne d'alimentation est constituée par un corps (5) inséré entre deux éléments tubulaires (4) et qui possède une cavité possédant une section transversale dont les dimensions sont supérieures à celles du tube (4) et dans lequel pénètre un guide d'ondes (7) arrivant du générateur d'hyperfréquences (6) et équipé d'au moins un transformateur d'hyperfréquences (9) ou d'au moins un élément anguleux ou un coude en E ou H, ou un conducteur coaxial équipé d'un transformateur d'hyperfréquences, ce corps (5) ou le guide d'ondes (7) aboutissant à ce corps comportant des organes d'accord (14) réglables, et qu'un dispositif (12) d'étanchéité vis-à-vis de la surpression, laissant passer l'énergie hyperfréquences est disposé à l'intérieur du transformateur d'hyperfréquences (9) ou de l'élément anguleux ou du coude en E ou H.

2. Dispositif selon la revendication 1, caractérisé en ce que les organes d'accord (14) sont logés dans des éléments de guide d'ondes accouplés à la cavité située dans le corps (5).

3. Dispositif selon la revendication 1 ou 2, caractérisé en ce que les guides d'ondes sont tous situés dans un plan.

4. Dispositif selon la revendication 1, caractérisé en ce que les éléments d'accord (14), réalisés sous la forme de tiges d'accord font saillie à l'intérieur de la cavité située dans le corps (5).

5. Dispositif selon la revendication 1, caractérisé en ce que les organes d'accord (14) sont des curseurs de court-circuit.

6. Dispositif selon la revendication 1 ou 2, caractérisé en ce que le conducteur coaxial ou le guide d'ondes (7), amenant l'énergie, et le guide d'ondes (15) logeant les organes d'accord (14) sont disposés en étant décalés respectivement de 120° dans le corps (5).

7. Dispositif selon l'une des revendications 1 à 6, caractérisé en ce que les organes d'accord (14) sont conçus pour réaliser un décalage du champ à l'intérieur du corps (5) et des tubes (4).

8. Dispositif selon la revendication 1, caractérisé en ce que des brides (17) pour le raccordement d'éléments tubulaires du tube (4) sont disposées des deux côtés du corps (5).

9. Dispositif selon la revendication 1, caractérisé en ce que la position radiale, par rapport à l'axe du tube, de chaque guide d'ondes (7), qui débouche dans la cavité (13) du corps (5), est décalée par rapport à celle du guide d'ondes (7) voisin du corps (5) voisin.

10. Dispositif selon la revendication 1, caractérisé en ce que le transformateur d'hyperfréquences (9) est réalisé dans le corps (5) de la ligne d'alimentation.

11. Dispositif selon la revendication 1, caractérisé en ce que le transformateur d'hyperfréquences (9) est constitué par une variation brusque de la section transversale du guide d'ondes (7).

12. Dispositif selon la revendication 1, caractérisé en ce que le dispositif (12) d'étanchéité vis-à-vis de la surpression est constitué par un bloc de céramique ou de matière plastique.

13. Dispositif selon la revendication 6, caractérisé en ce que le bloc possède la forme d'un parallélépipède dont la section transversale possède des dimensions supérieures à celles de la section transversale du guide d'ondes (7) amenant l'énergie hyperfréquences et est serrée contre ce dernier par l'intermédiaire d'une garniture d'étanchéité.

14. Dispositif selon la revendication 6, caractérisé en ce que le bloc possède une forme de coin, de tronc de cône ou de tronc de pyramide et que sa section transversale d'élargit en direction du tube (4).

15. Dispositif selon la revendication 1, caractérisé en ce qu'une canalisation d'amenée pour le gaz comprimé débouche à proximité directe du bloc du dispositif (12) d'étanchéité vis-à-vis de la surpression.

FIG.1

FIG.2

0 046 955

FIG. 3

FIG.4